# EUROPEAN PATENT APPLICATION

(11) **EP 4 722 084 A1**
(43) Date of publication of application: **08.04.2026**
(21) Application number: 24205066.4
(22) Date of filing: 07.10.2024
(51) Int. Cl.: B62D 25/00, B62D 21/15, B62D 29/00, B62D 25/04, B62D 25/02

(54) **REINFORCING UNIT FOR AN ELONGATED HOLLOW BODY**

(71) Applicant: Henkel AG & Co. KGaA, 40589 Düsseldorf (DE)
(72) Inventor: BARUAH, Abhijit, 201309 Noida (IN); PUNERA, Vandana, 122001 Haryana (IN); RAI, Rohit, 228159 Uttar Pradesh (IN); CHOPRA, Vishal, 12201 Haryana (IN)

(57) **Abstract**

The invention relates to a reinforcing unit (1) for an elongated hollow body (100) such as a pillar or a longitudinal beam of a motor vehicle, having a rod-shaped reinforcing element (10) which, in the position of use, extends along a longitudinal axis (11) in a cavity of the hollow body (100), and with at least a fixing element (20), which serves to spatially fix the reinforcing element (10) in the cavity and to transmit force between the hollow body (100) and the reinforcing element (10) and which has a first circumferential segment (21) and at least a second circumferential segment (21), the second circumferential segment (21) being separate from the first circumferential segment (21), which in the connected state being connected to one another by segment connecting means (40) and radially surround reinforcing element (10). The invention is characterised in that the circumferential segments (21, 22) can be transferred from a separate state into the connected state by means of a radial joining movement (23) directed perpendicular to the longitudinal axis (11) of the reinforcing element (10).

## Description

The invention relates to a reinforcing unit for an elongated hollow body. The hollow body can be, for example, a pillar or a longitudinal beam of a motor vehicle.

It is known from the prior art to arrange a reinforcing unit in the cavity of the hollow body to reinforce it. EP 3 750 681 A1 discloses a reinforcing unit with a rod-shaped reinforcing element which extends in the position of use along a longitudinal axis in the cavity of the hollow body. Strips of an expandable material are attached to the outer circumference of the rod-shaped reinforcing element. When the hollow body with the reinforcing element inside is heated, the expandable material foams up and spreads into the gap between the tubular reinforcing element and an inner side of an outer wall of the hollow body. In the expanded state, forces are transferred from the hollow body to the tubular reinforcing element via the now expanded material. If the shape of the hollow body deviates too much from the cross-section of the hollow reinforcing element and/or if the hollow body is significantly larger than the reinforcing element, the expandable material must bridge a large and possibly not constantly large gap during its expansion. This can be disadvantageous for safe and reliable force transmission between the hollow body and the reinforcing element.

EP 3 750 681 A1 discloses a reinforcing unit with a rod-shaped reinforcing element and with at least one fixing element, which serves to spatially fix the reinforcing element in the cavity of the hollow body and to transmit force between the hollow body and the reinforcing element. The fixing element has a first circumferential segment and at least a second circumferential segment that is separate from the first circumferential segment. The first circumferential segment and the second circumferential segment are connected to each other in a connected state by segment connecting means. The circumferential segments radially surround the reinforcing element.

The segment connecting means comprise a dovetail-shaped profile formed onto the first circumferential segment. The profile can be pushed into a correspondingly formed hollow profile of the second circumferential segment. The profile and the hollow profile extend in the direction of the longitudinal axis of the rod-shaped reinforcing element, so that the circumferential segments can only be connected to each other by a corresponding relative movement along the longitudinal axis of the reinforcing element. Another way of assembling the reinforcing unit is to first connect the circumferential segments to each other and then push them axially onto the reinforcing element in the connected state. In both cases, however, the design of the profile and hollow profile restricts the way in which the reinforcing unit can be assembled.

The invention is based on the object of providing a reinforcing unit for an elongated hollow body that ensures safe and reliable reinforcement of the hollow body and is easy to install.

The object underlying the invention is solved by the combination of features according to claim 1. Embodiments of the invention can be taken from the subclaims to claim 1.

According to the invention, it is provided that the circumferential segments can be transferred from a separated state to the connected state by a radial movement perpendicular to the longitudinal axis of the reinforcing element. If, for example, the elongated hollow body has two body shells that are connected to each other after the reinforcing unit has been inserted, the first circumferential segment can first be placed in one of the two body shells to insert the reinforcing unit, then the reinforcing element can be placed in the first circumferential segment and finally the second circumferential segment can be connected to the first circumferential segment or to the reinforcing element by a movement perpendicular to the longitudinal axis of the reinforcing element. The separation of the fixing element into at least two and preferably exactly two circumferential segments and the possibility of connecting these circumferential segments to each other by a radial movement (i.e. perpendicular to the longitudinal axis of the reinforcing element) facilitates the insertion of the reinforcing unit into the elongated hollow body.

Preferably, the rod-shaped reinforcing element is a tube. In contrast to a solid body, the use of which is also conceivable, a tube wall encloses a tube cavity. The thickness of the tube wall can be at least a factor of 5 or a factor of 10 less than the largest dimension of a cross-section of the reinforcing element. The cross-section of the reinforcing element can be circular or angular, for example rectangular. The longitudinal axis of the reinforcing element can be straight or curved in order to be able to follow the straight or curved longitudinal extension of the hollow body.

The first circumferential segment can have a carrier with a first inner surface section directed towards the reinforcing element and with a first outer surface section directed towards the inside of the outer wall of the hollow body. If the reinforcing element is a circular tube, for example, the first inner surface section of the first circumferential segment can be designed as a semi-circular shell for receiving the circular tube. The first outer surface section can be designed in such a way that a gap with an approximately constant gap width is formed between the carrier and the hollow body.

In one embodiment, the first inner surface section and the first outer surface section are each at least partially covered with an expandable material. A layer thickness of the expandable material can be only a few millimeters, for example 2 to 15 mm, preferably 4 to 10 mm.

The expandable material can be an easily expandable epoxy-based structural foam. An expansion rate of the expandable material can be 100 to 500%. The minimum temperature at which expansion or foaming of the expandable material takes place may be in the range of 130 to 160°C. The density of the expandable material (before expansion/foaming) can be 1.1 to 1.5 g/cm³ . Depending on the expansion rate, the density after expansion is in the range of 0.3 to 0.6 g/cm³ . The products Teroson EP 1475 or Teroson EP 1465 from Henkel AG & Co KGaA, which are available on the market, are preferably used for the expandable material.

Viewed in the direction of the longitudinal axis of the reinforcing element, the first outer surface section can be arranged between the first inner surface section and a second inner surface section. A second outer surface section can follow the second inner surface section in the axial direction, so that an inner surface section and an outer surface section alternate in the axial direction. This means that the amount of material used for the expandable material can be kept to a minimum.

In a non-expanded state of the expandable material, there may be play between the first inner surface section and the reinforcing element. Alternatively or additionally, there may be a play between the first outer surface section and the inside of the outer wall of the hollow body. The play can be 2 to 6 mm, preferably 3 to 5 mm. This simplifies the assembly of the reinforcing unit or its insertion into the hollow body. When the expandable material expands, the corresponding gap between the inner surface section and the reinforcing element or between the outer surface section and the inside of the hollow body is closed and a firm bond is created between the reinforcing element and the hollow body.

The first circumferential segment can have at least one protrusion that engages through an opening in the reinforcing element. Preferably, the protrusion extends in a radial direction perpendicular to the longitudinal axis of the reinforcing element. By engaging the protrusion in the opening, the position of the first circumferential segment relative to the reinforcing element is precisely defined in the axial direction and in the circumferential direction.

The protrusion can have latching means that hold the first circumferential segment on the reinforcing element. If the latching means is in the latched position, it is not possible to separate the first circumferential segment from the reinforcing element.

In one embodiment, the above remarks on the first circumferential segment also apply analogously to the second circumferential segment. For example, the second circumferential segment can also have a carrier with a first inner surface section and a first outer surface section, which are at least partially coated with the expandable material. The second circumferential segment can also have a protrusion for fixing it to the reinforcing element.

The segment fastening means can have at least one latching tab and at least one latching receptacle for the latching tab, whereby the latching tab is fastened to the first circumferential segment and the latching receptacle is fastened to the second circumferential segment. The first circumferential segment and the second circumferential segment are connected to each other by the latching tab locked in the latching receptacle.

In one embodiment, the latching tab of the segment fastening means and the latching means of the protrusion can each be brought into a locked position simultaneously with a linear relative movement between the first circumferential segment and the second circumferential segment. This simplifies the assembly of the reinforcing unit.

The latching tab can be formed onto a first end wall of the carrier of the first circumferential segment. The latching receptacle can be formed onto a first end wall of the carrier of the second circumferential segment. A further latching tab or a further latching receptacle can be provided on the first end wall of the carrier of the first circumferential segment, so that two fastening points are provided on the first end wall, at which the circumferential segments are connected to one another. In addition, one or two latching elements (latching tab or latching recess) can be provided on a second end wall of the carrier of the first circumferential segment and on a second end wall of the carrier of the second circumferential segment. In one embodiment, a total of four fastening points are thus provided for connecting the circumferential segments.

The invention is explained in more detail with reference to the embodiment shown in the drawing. It is shown in:
- Figure 1: a perspective view of a hollow body with a reinforcing unit;
- Figure 2: a sectional view of Figure 1;
- Figure 3: a perspective view of the reinforcing unit in a not yet connected state;
- Figure 4: a plan view of Figure 3 from the front;
- Figure 5: a sectional view of Figure 3;
- Figure 6: a perspective view of the reinforcing unit in the connected state;
- Figure 7: a plan view of Figure 6 from the front;
- Figure 8: a sectional view of Figure 6;
- Figure 9: a plan view of Figure 8 from above, and
- Figure 10: a cross-section of the reinforcing unit.

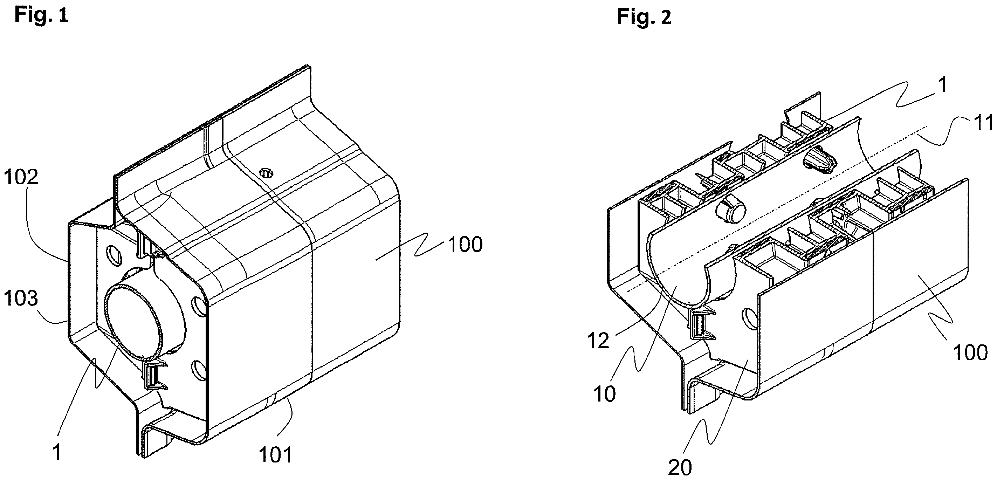

Figures 1 and 2 show a section of an elongated hollow body, designated 100. As can be seen in particular from the sectional drawing according to Figure 2, a reinforcing unit 1 is arranged in a cavity of the hollow body 100, which has a rod-shaped reinforcing element 10 and a fixing element 20. Like the elongated hollow body 100, the rod-shaped reinforcing element 10 is only shown in sections and can extend along a longitudinal axis 11 beyond the section shown.

The fixing element 20 serves to spatially fix the reinforcing element 10 in the cavity of the hollow body 100 and to transmit forces from the hollow body 1 to the reinforcing element 10. Thus, the reinforcing element 10 can absorb forces that act from the outside on an outer wall 105 of the hollow body 100. The reinforcing unit 1 can have a further fixing element which is spaced axially (in the direction of the longitudinal axis 11) from the fixing element 10 shown in Figures 1 and 2 and fixes the rod-shaped reinforcing element 10 at a different axial section in the cavity of the hollow body 100.

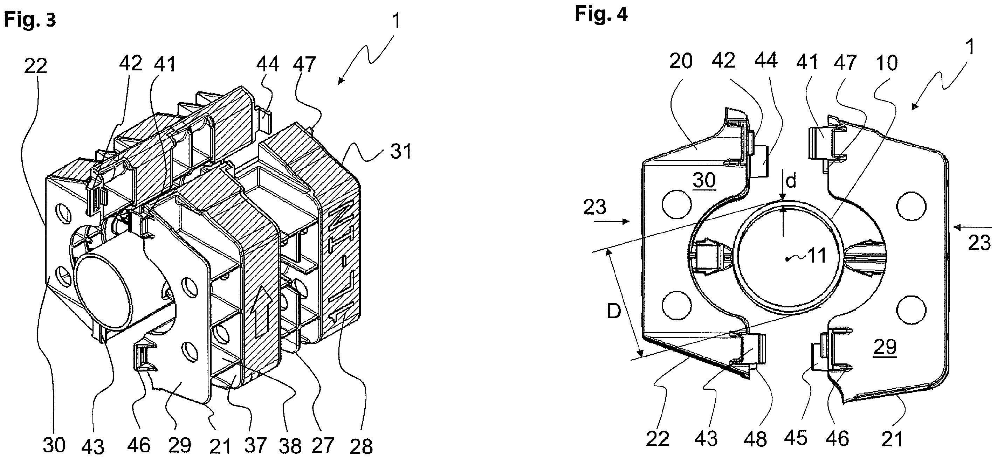

The rod-shaped reinforcing element 10 is a tube with a tube wall 12 whose thickness d is less than 10 % or even less than 6 % of the outer diameter D of the tube (see Figure 4).

The hollow body 100 has a first body shell 101 and a second body shell 102, which are connected to each other at their lateral ends. The body shells 101 and 102 form the outer wall 103 with an inner side 104 facing the cavity and an outer side 105 facing outwards.

Figures 3 to 10 show further views of the reinforcing unit 1. Figures 3 to 9 do not show the hollow body 100, which is to be reinforced by the reinforcing unit 1.

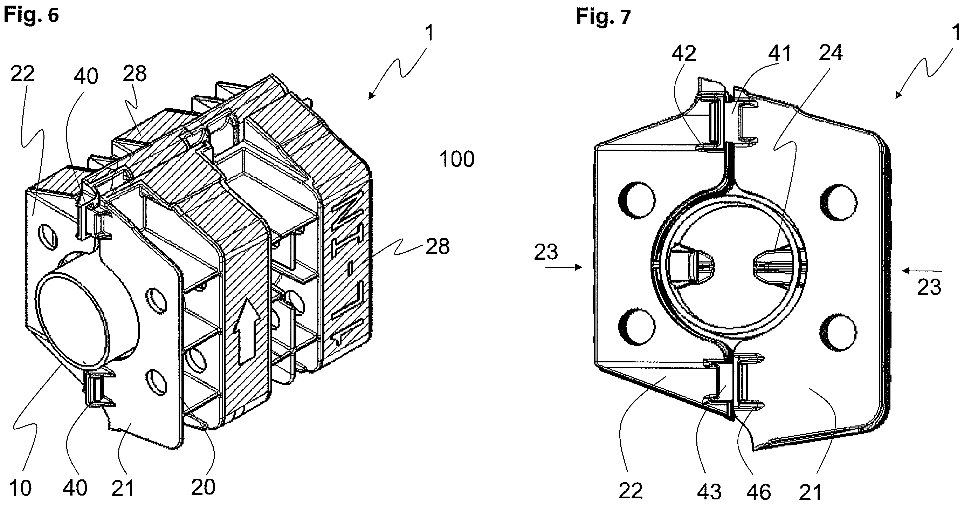

The fixing element 20 has a first circumferential segment 21 and a second circumferential segment 22, which radially surround the reinforcing element 10 in a connected state (see in particular Figures 6 to 8). Figures 3 to 5 show the two circumferential segments 21, 22 in a separated or not yet connected state. The circumferential segments 21, 22 are separate components. The combined view of Figures 4 and 7 makes it clear that the two circumferential segments 21, 22 can be joined together by a linear movement along the arrows 23. This joining movement 23 lies in the drawing plane in the illustration of Figures 4 and 7 and extends perpendicular to the longitudinal axis 11 of the reinforcing element 10. The longitudinal axis 11 extends perpendicular to the drawing plane.

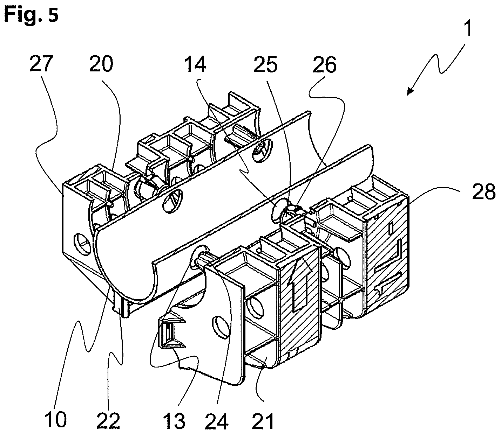

See Figure 5: The first circumferential segment 21 has a first pin-shaped protrusion 24, which engages through an opening 13 of the reinforcing element 10 when the circumferential segments 21, 22 are connected. The first protrusion 24 extends radially and perpendicularly to the longitudinal axis 11 of the reinforcing element 10. A second protrusion 25 is provided at an axial distance from the first protrusion 24, which also engages through a further opening 14 in the reinforcing element 10 in the connected state. The second protrusion 25 is equipped with latching means 26, which prevent the first circumferential segment 21 from coming loose after the protrusion 25 has been inserted into the reinforcing element. The interaction of the protrusions 24, 25 with the openings 13, 14 determines the position of the reinforcing element 10 relative to the first circumferential segment 21.

The second circumferential segment 22 also has protrusions, which determine the position of the reinforcing element 10 relative to the second circumferential segment. For a more detailed description, please refer to the comments on the first circumferential segment 21. This also applies analogously to further features which the first circumferential segment 21 and the second circumferential segment 22 have in common, but which are described here in more detail only in relation to the first circumferential segment 21. The description of the features of the first circumferential segment can thus be transferred analogously to the second circumferential segment 22.

The first circumferential segment 21 (or correspondingly the second circumferential segment 22) has a carrier 27 and an expandable material 28, which is applied to the carrier 27 at various points. The carrier 27 is made of a material that is dimensionally stable at a temperature at which the expandable material foams or expands. For example, the carrier 27 can be made of a plastic that is dimensionally stable at temperatures up to 170°C.

In the connected state, the first circumferential segment 21 and the second circumferential segment 22 are held together directly by segment connecting means 40. The segment connecting means 40 comprise at least a latching tab 41 and at least a latching receptacle 42 for the latching tab 41. The latching tab 41 is formed onto a first end wall 29 of the carrier 27 of the first circumferential segment 21 and interacts with the latching receptacle 42, which is attached to a first end wall 30 of the second circumferential segment 22. In addition to the latching tab 41 and the latching receptacle 42, further latching tabs 43, 44, 45 and further latching receptacles 46, 47 and 48 are provided. The further latching tab 43 is formed onto the first end wall 30 of the second circumferential segment 22. The further latching tab 43 acts together with the further latching receptacle 46 on the first end wall of the first circumferential segment 21. The further latching tabs 44 and 45 and the further latching receptacles 47 and 48 are provided on a second end wall 31, 32 of the circumferential segments 21, 22. The two circumferential segments 21, 22 are thus held together at four fastening points, independently of the protrusions 24, 25. The four fastening points are spaced apart and ensure a firm connection between the two circumferential segments 21, 22. The connection between the circumferential segments 21, 22 is made directly by the segment connecting means 40 with the latching tabs 41, 43, 44, 45 and the latching receptacles 42, 46, 47, 48 and indirectly via the rod-shaped connecting element 10 by the protrusions 25, 26. The latching tabs 41, 43, 44, 45 and the ratchet receptacles 42, 46, 47, 48 can be connected by the same joining movement 23 by which the protrusions 24, 25 are inserted into the openings 13, 14.

The carrier 27 has a first inner surface section 33 and a second inner surface section 34, each of which is coated with the expandable material 28. The first inner surface section 33 has the shape of a semi-circular annular shell for receiving the reinforcing element 10. An inner diameter of the first inner surface section 33 or the annular shell is slightly larger than the outer diameter D of the reinforcing element 10, so that a small gap remains in the unexpanded state of the expandable material 28. This simplifies the assembly of the reinforcing unit 1. After expansion, this gap is completely filled by the expanded material, which ensures a tight fit of the circumferential segments 21, 22 on the reinforcing element 10 in the connected state of the circumferential segments 21, 22.

The second inner surface section 34 is spaced apart from the first inner surface section 33 in the axial direction. The second inner surface section 34 has essentially the same shape and design as the first inner surface section 33.

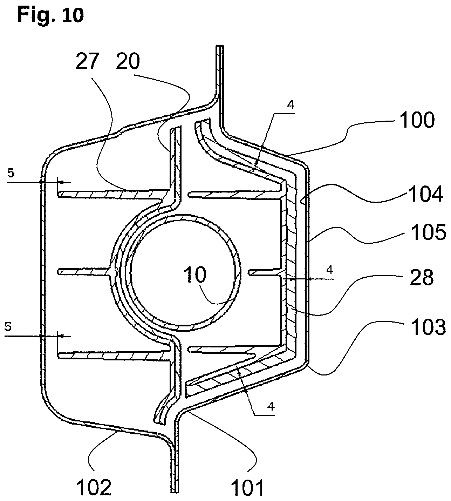

In the radial direction between the first inner surface section 33 and the second inner surface section 34, a first outer surface section 35 is provided, which is also coated with the expandable material 28. In the installed position, the first outer surface section 35 is opposite the inner side 104 of the outer wall 103 of the hollow body 100 (see Figure 10). The contour of the first outer surface section 35 corresponds approximately to the contour of the outer wall 103 of the hollow body 100. There is a gap or clearance between the first outer surface section 35 and the inner side 104, which is dimensioned with 4 mm in Figure 10.

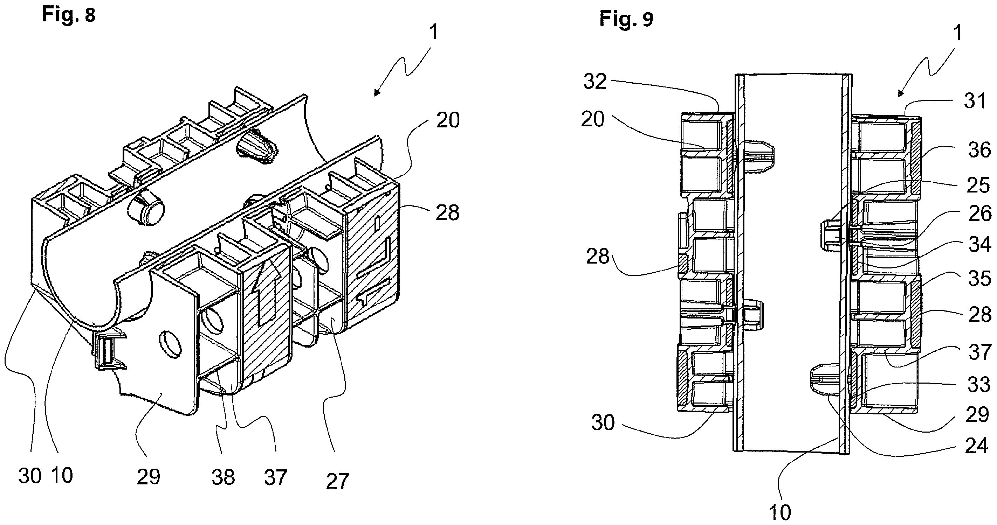

As can be seen in Figure 9, the first circumferential segment 21 has a second outer surface section 36, which is axially spaced from the first outer surface section 35. Viewed in the axial direction, an inner surface section 33, 34 alternates with an outer surface section 35, 36.

An intermediate wall 37 extends in the radial direction between the first inner surface section 33 and the first outer surface section 35. Such an intermediate wall 37 is provided in each case between an inner surface section 33, 34 and a neighbouring outer surface section 35, 36. A total of three intermediate walls 37 are arranged between the first end wall 29 and the second end wall 31. Ribs 38 extend between an end wall 29, 31 and an intermediate wall 37 or between two neighbouring intermediate walls 37, which, in conjunction with the end walls 29, 31 and the intermediate walls 37, give the carrier 27 a very high degree of dimensional rigidity with small material input.

The expansion of the expanded material 28 fills the gaps between the first circumferential segment 21 and the reinforcing element 10 or between the second circumferential segment 22 and the reinforcing element 10 as well as the gaps between the circumferential segments 21, 22 and the outer wall 103 of the hollow body 100, so that a firm bond is formed between the hollow body 100, the fixing element 20 and the reinforcing element 10. Due to the lattice design of the carrier 27, the reinforcing unit 1 has a high degree of rigidity with a low weight.

### List of reference symbols

- 1: reinforcing unit

- 10: reinforcing element
- 11: longitudinal axis
- 12: pipe wall
- 13: opening
- 14: opening

- 20: fixing element
- 21: first circumferential segment
- 22: second circumferential segment
- 23: arrow / joining movement
- 24: first protrusion
- 25: second protrusion
- 26: latching means
- 27: carrier
- 28: expandable material
- 29: first end wall of the first circumferential segment
- 30: first end wall of the second circumferential segment
- 31: second end wall of the first circumferential segment
- 32: second end wall of the second circumferential segment
- 33: first inner surface section
- 34: second inner surface section
- 35: first outer surface section
- 36: second outer surface section
- 37: intermediate wall
- 38: rib

- 40: segment fastening means
- 41: latching tab
- 42: latching receptacle
- 43: additional latching tab
- 44: additional latching tab
- 45: additional latch tab
- 46: additional latching receptacle
- 47: additional latching receptacle
- 48: additional latching receptacle

- 100: elongated hollow body
- 101: first body shell
- 102: second body shell
- 103: outer side
- 104: inner side
- 105: outer wall

## Claims

1. Reinforcing unit (1) for an elongated hollow body (100) such as a pillar or a longitudinal beam of a motor vehicle, having a rod-shaped reinforcing element (10) which, in the position of use, extends along a longitudinal axis (11) in a cavity of the hollow body (100), and with at least a fixing element (20), which serves to spatially fix the reinforcing element (10) in the cavity and to transmit force between the hollow body (100) and the reinforcing element (10) and which has a first circumferential segment (21) and at least a second circumferential segment (21), the second circumferential segment (21) being separate from the first circumferential segment (21), which in the connected state being connected to one another by segment connecting means (40) and radially surround reinforcing element (10), **characterised in that** the circumferential segments (21, 22) can be transferred from a separate state into the connected state by means of a radial joining movement (23) directed perpendicular to the longitudinal axis (11) of the reinforcing element (10).

2. Reinforcing unit (1) according to claim 1, **characterised in that** the first circumferential segment (21) has a carrier (27) with a first inner surface section (33) directed towards the reinforcing element (10) and with a first outer surface section (35) directed towards an inner side (104) of an outer wall (103) of the hollow body (100).

3. Reinforcing unit (1) according to claim 2, **characterised in that** the first inner surface section (33) and the first outer surface section (35) are each at least partially covered with an expandable material (28).

4. Reinforcing unit (1) according to claim 3, **characterised in that** the first outer surface section (35) is arranged between the first inner surface section (33) and a second inner surface section (34) as viewed in the direction of the longitudinal axis (11) of the reinforcing element (10).

5. Reinforcing unit (1) according to claim 3 or 4, **characterised in that** in a non-expanded state of the expandable material (28)
- between the first inner surface section (33) and the reinforcing element (10) and/or
- between the first outer surface section (35) and the inside (104) of the outer wall (103) of the hollow body (100)
a play is given.

6. Reinforcing unit (1) according to one of claims 1 to 5, **characterised in that** the first circumferential segment (21) has at least one protrusion (24, 25) which engages through an opening (13, 14) of the reinforcing element (10).

7. Reinforcing unit (1) according to claim 6, **characterised in that** the protrusion (24, 25) extends in a radial direction perpendicular to the longitudinal axis (11) of the reinforcing element (10).

8. Reinforcing unit (1) according to claim 6 or 7, **characterised in that** the protrusion (25) has latching means (26) by which the first circumferential segment (21) is held on the reinforcing element (10).

9. Reinforcing unit (1) according to one of claims 1 to 8, **characterised in that** the segment fastening means (40) have at least one latching tab (41) and at least one latching receptacle (42) for the latching tab (41), the latching tab (41) being fastened to the first circumferential segment (21) and the latching receptacle (42) being fastened to the second circumferential segment (22).

10. Reinforcing unit (1) according to claims 8 and 9, **characterised in that** the latching tab (41) of the segment fastening means (40) and the latching means (26) of the protrusion (25) can each be brought into a locked position simultaneously with the linear joining movement (23) between the first circumferential segment (21) and the second circumferential segment (22).

11. Reinforcing unit (1) according to claim 9 or 10, **characterised in that** the latching tab (41) is formed on a first end wall (29) of the carrier (27) of the first circumferential segment (21).

12. Reinforcing unit (1) according to one of claims 9 to 11, **characterised in that** the latching receptacle (42) is formed on a first end wall (30) of the carrier of the second circumferential segment (22).
